(19) Europäisches Patentamt
European Patent Office
Office européen des brevets

(11) EP 0 726 298 A1

(12) # DEMANDE DE BREVET EUROPEEN

(43) Date de publication:
**14.08.1996 Bulletin 1996/33**

(51) Int. Cl.[6]: **C09C 3/08**, C09D 17/00, C08K 9/04, C08L 75/04

(21) Numéro de dépôt: **96200187.1**

(22) Date de dépôt: **26.01.1996**

(84) Etats contractants désignés:
**AT BE CH DE DK ES GB GR IE IT LI LU NL PT SE**

(30) Priorité: **31.01.1995 FR 9501304**

(71) Demandeur: **OMYA S.A.**
**F-75725 Paris Cedex 15 (FR)**

(72) Inventeurs:
- **Fichou, Jean-Pierre**
  **F-92300 Levallois Perret (FR)**
- **Ravet, Georges**
  **F-69290 Saint-Genis-Les-Ollières (FR)**
- **Husson, Maurice**
  **F-51000 Chalons sur Marne (FR)**
- **Blanchard, Pierre**
  **F-01600 Reyrieux (FR)**

(74) Mandataire: **Richebourg, Michel François**
**Cabinet Michel Richebourg,**
**"Le Clos du Golf",**
**69, rue Saint-Simon**
**42000 Saint Etienne (FR)**

(54) **Charges minérales traitées - suspensions de ces charges dans les polyols et leurs utilisations dans les mousses polyuréthanes**

(57) Procédé de traitement de charges minérales à l'aide d'agents de traitement de type phosphate organique en vue de l'utilisation de ces charges minérales traitées dans les mousses polyuréthannes.

Charges minérales traitées obtenues par le dit procédé et suspensions de ces charges minérales traitées dans les polyols.

Utilisation de ces suspensions à la fabrication de mousses polyuréthannes souples, semi-rigides ou rigides mises en oeuvre pour la fabrication d'objets moulés ou non.

EP 0 726 298 A1

Printed by Rank Xerox (UK) Business Services
2.13.2/3.4

## Description

L'invention concerne un procédé de traitement de charges minérales à l'aide d'agents de traitement de type phosphate organique.

L'invention concerne également les charges minérales traitées par ce type d'agents de traitement et destinées à être mises en suspension dans un polyol en vue de leurs utilisations dans la fabrication de mousses polyuréthannes et plus particulièrement les charges minérales traitées par ce procédé.

L'invention concerne aussi les suspensions dans les polyols de ces charges minérales traitées ainsi que leurs utilisations dans la fabrication des mousses polyuréthannes souples, semi-rigides ou rigides.

L'invention concerne enfin l'utilisation des mousses polyuréthannes souples, semi-rigides ou rigides contenant ces charges minérales traitées à la fabrication d'objets moulés ou non.

Pour diminuer le prix de revient au litre et au kilogramme des objets moulés ou non à partir des mousses de polyuréthanne souples, semi-rigides ou rigides, il s'avère de plus en plus nécessaire d'augmenter la quantité de charge présente dans les mousses de polyuréthanne rigides, semi-rigides ou souples tout en conservant ou améliorant leurs propriétés physico-chimiques telles que par exemple la compression ou bien encore des propriétés esthétiques ou autres telles que l'ignifugation, demandées dans divers domaines de l'industrie tels que notamment les transports par exemple l'automobile, l'ameublement, le bâtiment ou autres.

Il existe à ce jour plusieurs procédés pour introduire les charges minérales dans ces composés polyuréthannes.

Dans un premier type de procédé (FR 2 651 238), le carbonate de calcium est introduit dans un plastifiant pour polyuréthanne. Ce procédé d'obtention d'une suspension de charge dans un plastifiant qui permet d'augmenter le taux de charge dans le composé polyuréthanne ne pouvait cependant convenir à la Demanderesse car il s'avère de coût élevé et de mise en oeuvre trop pointue pour pouvoir être utilisé dans la fabrication de mousses polyuréthannes souples, semi-rigides ou rigides et cause une dégradation des propriétés physico-chimiques des mousses obtenues à partir de cette suspension de charge.

La Demanderesse s'est alors totalement écartée de ce type de procédé pour introduire les charges minérales dans les mousses de polyuréthanne souples, semi-rigides ou rigides par un moyen peu onéreux, simple, et sans problème de baisse significative de réactivité des mousses polyuréthannes.

Dans ce but, des procédés d'introduction de la charge dans le polyol, un des constituants du polyuréthanne, sont connus de l'homme du métier.

Un premier type de procédé enseigne le greffage d'acide méthacrylique (DE 2 654 746, DE 2 714 291, DE 2 739 620) ou d'un autre composé vinylique comme le styrène sur le polyol. Mais ce type de procédé ne permet pas à la suspension de carbonate de calcium dans le polyol d'être exploitable car trop difficilement manipulable par suite d'une viscosité trop élevée et d'une mauvaise répartition de la charge dans le milieu.

Un autre type de procédé consiste à traiter la charge en surface préalablement à son introduction dans le polyol au moyen d'un agent qui est par exemple un alcool ayant 8 à 14 atomes de carbone (FR 2 531 971), ou un phosphate d'acide hydroxycarboxylique (EP 0 202 394).

Mais ces procédés produisent le même type d'inconvénients que ceux précités puisque l'utilisateur se trouve confronté à des problèmes de mauvaise dispersibilité dans le polyol de la charge minérale ainsi traitée.

Ainsi les techniques connues jusqu'à ce jour n'apportent pas de solution réelle au problème de la mise en suspension dans le polyol de charges minérales destinées à être utilisées dans la fabrication de mousses polyuréthannes souples, semi-rigides ou rigides.

Confrontée à ce problème, la Demanderesse a mis au point un procédé de traitement d'une charge minérale au moyen d'au moins un agent de traitement de type phosphate organique ainsi qu'une charge minérale traitée, qui permet, de manière surprenante, l'obtention d'une suspension de charge minérale dans les polyols à haute teneur en charge et de faible viscosité c'est-à-dire une suspension homogène ni soumise à sédimentation, ni soumise à décantation, ni soumise à un épaississement rédhibitoires pour la fabrication des mousses de polyuréthanne rigides, semi-rigides ou souples.

Ainsi un des buts de l'invention est la mise au point d'un procédé de traitement de charges minérales , en vue de leurs mises en suspension dans les polyols, à l'aide d'au moins un agent de traitement du type phosphate organique de formule générale (I) :

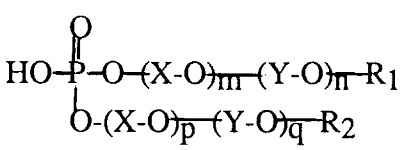

avec $R_1$ = soit H soit alkyle en $C_8$ à $C_{40}$ soit aryle ou alkylaryle ou arylalkyle en $C_6$ à $C_{40}$

avec $R_2$ = soit alkyle en $C_8$ à $C_{40}$ soit aryle ou alkylaryle ou arylalkyle en $C_6$ à $C_{40}$

$X = -CH_2-CH_2-$

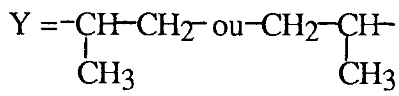

(m + n) varie de 0 à 30 avec m ≤ 30 et n ≤ 30

(p + q) varie de 0 à 30 avec p ≤ 30 et q ≤ 30

De même un autre but de l'invention est la mise au point de ces charges minérales traitées, dont les suspensions sont destinées à être mises en oeuvre dans la fabrication de mousses polyuréthannes souples, semi-rigides ou rigides et dont les caractéristiques simultanées sont une prise de polyol diminuée d'au moins 20 % par rapport à la charge minérale non traitée et une conservation de leur hydrophilie.

Un but supplémentaire de l'invention est la mise au point des suspensions homogènes, stables et de faible viscosité dans les polyols de ces charges minérales traitées, caractérisées par une concentration en poids de charges minérales pouvant atteindre 80 %, et une teneur en agent de traitement allant de 0,5 % à 3 % en poids par rapport au poids sec de la charge.

Ces suspensions homogènes, stables et de faible viscosité selon l'invention sont facilement manipulables car elles ne présentent, dans des conditions d'utilisation normales pour l'homme du métier, ni phénomène de décantation c'est-à-dire séparation en deux phases, ni phénomène de sédimentation c'est-à-dire présence d'un dépôt dur au fond du bac dans lequel est stockée la suspension, ni épaississement rédhibitoires et permettent ainsi l'obtention de mousses polyuréthannes souples, semi-rigides ou rigides avec d'excellentes propriétés physico-chimiques.

Enfin un autre but de l'invention est l'utilisation de ces dispersions homogènes stables et de faible viscosité de charges minérales dans la fabrication des mousses polyuréthannes souples, semi-rigides ou rigides ainsi que l'utilisation de ces dites mousses à la fabrication d'objets moulés ou non.

Ces buts sont atteints par un procédé de traitement préféré selon lequel on mélange au moins un agent de traitement de formule générale (I) avec la charge minérale à traiter de manière à obtenir un facteur d'homogénéité (FH) inférieur à 0,2 et préférentiellement inférieur à 0,10 et très préférentiellement inférieur à 0,05, le dit facteur étant défini comme la différence en poids entre le refus au tamisage à sec des charges traitées et le refus au tamisage à sec des charges non traitées c'est-à-dire exprimé par la formule :

$$FH = \frac{(\text{masse de la charge traitée restée sur le tamis})}{(\text{masse de la prise d'essai de la charge traitée})} - \frac{(\text{masse de la charge non traitée restée sur le tamis})}{(\text{masse de la prise d'essai de la charge non traitée})}$$

et mesuré par utilisation d'un tamis conforme à la norme NF X11-501 (ouverture de maille 325 meshs).

On peut ici préciser que cette méthode de mesure du refus au tamisage à sec consiste à peser précisement environ 100 grammes de la charge dont on veut déterminer le refus puis à verser cette quantité dans le tamis d'ouverture de maille correspondant à 325 meshs.

Le dit tamis est alors placé sur un tamiseur mécanique commercialisé par la société RETSCH Gmbh sous le type 3D et animé, pendant trente minutes, d'un mouvement oscillatoire correspondant à la graduation comprise entre 50 et 100.Au bout des trente minutes, le refus à sec resté sur le tamis est soumis à l'action modérée d'un pinceau conforme à la norme NF T30-024 de manière à ne pas détruire les agglomérats présents à la surface du tamis.

Le refus est ainsi déterminé par le rapport de la pesée de la charge restée sur le tamis sur le poids précis de la charge versée sur le tamis.

Les charges minérales ainsi traitées, selon l'invention et permettant l'obtention de suspensions stables et homogènes dans les polyols sont choisies parmi les charges minérales conférant aux mousses de polyuréthannes des propriétés physicochimiques compatibles avec l'utilisation de ces dernières à la fabrication d'objets en matière plastique et sont notamment choisies parmi les carbonates de calcium d'origine naturelle ou synthétique, le carbonate de magnésium, le carbonate de zinc, les sels mixtes de magnésium et de calcium tels que les dolomies, la chaux, la magnésie, le sulfate de baryum, les sulfates de calcium, les hydroxydes de magnésium, d'aluminium, la silice, la wollastonite, les argiles et autres silico-alumineux tels que les kaolins, les silico-magnésiens tels que le talc, le mica, les billes de verre pleines ou creuses, les oxydes métalliques tels que par exemple l'oxyde de zinc, les oxydes de fer, l'oxyde de titane et plus particulièrement choisies parmi les carbonates de calcium naturels ou précipités tels que craie, calcite, marbre, les dolomies, l'hydroxyde d'aluminium, l'hydroxyde de magnésium, le talc, ou leurs mélanges.

Les charges minérales selon l'invention se distinguent de l'art antérieur par le fait qu'elles conservent leur hydrophilie tout en ayant une prise de polyol diminuée d'au moins 20 % et préférentiellement d'au moins 15 % par rapport à

la charge minérale non traitée et plus particulièrement en ce qu'elles sont obtenues par le procédé de traitement selon l'invention.
Par de préférence, on entend le fait que l'invention couvre aussi les valeurs entre 15 % et 20 %, étant bien entendu que l'efficacité des résultats est d'autant meilleure que la diminution de la prise de polyol est plus élevée.

Les polyols utilisés appartiennent aux familles des polyéthers et des polyesters.

Parmi les polyéthers polyols courants peuvent être cités par exemple, les produits d'addition d'oxyde de propylène sur un polyol simple tel que par exemple, le glycol, le glycérol, le triméthylolpropane, le sorbitol, en présence ou non d'oxyde d'éthylène. Mais peuvent être également cités des polyéthers polyols spéciaux tels que par exemple des polyéthers à base aminée, obtenus par addition d'oxyde de propylène ou éventuellement d'oxyde d'éthylène sur des amines, des polyéthers halogénés, des polyéthers greffés résultant de la copolymérisation de styrène et d'acrylonitrile en suspension dans un polyéther, ou encore le polytétraméthylèneglycol.

Parmi les polyesters polyols peuvent être mentionnnés par exemple ceux résultant de la polycondensation de polyalcools sur des polyacides ou leurs anhydrides tels que des diacides, tels que par exemple adipique, phtalique ou autres, réagissant avec des diols (par exemple éthylène glycol, propylène glycol, butylène glycol ou autres); des triols (par exemple, glycérol, triméthylolpropane ou autres), et des tétrols (par exemple, le pentaérythritol ou autres, seuls ou en mélange).

Mais parmi les polyols peuvent être également évoqués des composés divers hydroxylés tels que par exemple les polybutadiènes hydroxylés, les prépolymères à terminaisons hydroxyles (résultant de la réaction d'un excés de polyol sur un diisocyanate), ou encore les polyols simples tels que par exemple glycérol, aminoalcools mis en oeuvre en petite quantité avec les polyéthers polyols ou les polyesters polyols pour augmenter la réticulation.
La prise de polyol qui traduit le pouvoir d'absorption des charges est par définition le nombre de millilitres ou de grammes de polyol utilisé pour 100 g ou 100 ml de matière de charge dans les conditions de la mesure de l'essai déterminées par une méthode dérivant de la norme ISO 787/5.

Les suspensions de charges minérales dans les polyols, selon l'invention qui peuvent également contenir d'autres produits minéraux et/ou organiques tels que catalyseurs et/ou anti-oxydants et/ou autres se caractérisent en ce que la concentration en matière sèche des matériaux minéraux traités peut atteindre 80 % en poids, et en ce qu'elles ne soient soumises ni à décantation, ni à sédimentation, ni à un épaississement rédhibitoires après un stockage au repos de 7 jours pour la fabrication de mousses polyuréthannes souples, semi-rigides ou rigides c'est-à-dire ayant une viscosité apparente Brookfield stable et inférieure à celle des suspensions des charges minérales non traitées et en ce qu'elles contiennent 0,5 % à 3 % en poids par rapport au poids de la charge minérale d'un agent de traitement de formule générale (I) et préférentiellement de 0,7 % à 1,5 % en poids.

Les suspensions ainsi chargées, homogènes, stables et de faibles viscosités, selon l'invention ont la particularité de pouvoir être utilisées dans la fabrication des mousses polyuréthannes qu'elles soient souples, semi-rigides ou rigides.

De plus les mousses polyuréthannes souples, semi-rigides ou rigides obtenues par l'utilisation des suspensions dans les polyols selon l'invention des charges traitées selon l'invention sont utilisées pour l'élaboration d'objets moulés ou non.

La portée et l'intérêt de l'invention seront mieux perçus grâce aux exemples suivants qui ne sauraient présenter aucun caractère limitatif.

EXEMPLE 1 :

Cet exemple illustre différents modes de traitement des charges minérales à l'aide d'un même agent de traitement ainsi que le facteur d'homogénéité obtenu pour chacun des traitements.

Essai n° 1 :

Cet essai illustre le traitement d'un carbonate de calcium naturel selon un procédé connu.
Ainsi, on introduit, dans un mélangeur GUITTARD de type ML2 disposant d'une zone de malaxage préchauffée, 1000 g d'un carbonate de calcium naturel vendu par la société OMYA S.A. sous le nom de MILLICARB et 50 g d'un phosphate acide d'alcool stéarylique.
Puis on laisse malaxer le mélange pendant 20 minutes à la vitesse de 47 tours/minute.
La poudre de carbonate de calcium ainsi traitée est ensuite refroidie pour l'essai de tamisage à sec sur tamis d'ouverture de maille de 325 meshs. Le refus après tamisage est de 25 g pour 100 g de carbonate de calcium traité alors que le refus au tamisage pour le carbonate de calcium de départ est de 0,01g pour 100 g de carbonate de calcium non traité.
Le facteur d'homogénéité FH est alors égal à $\frac{25}{100} - \frac{0,01}{100} = 0,2499$

Essai n° 2 :

Cet essai illustre un autre mode de traitement d'un carbonate de calcium naturel.

Ainsi, on introduit dans un mélangeur de type GUEDU, 1000 g d'un carbonate de calcium naturel vendu par la société OMYA S.A. sous le nom de MILLICARB et 50g de granulés d'un phosphate acide d'alcool stéarylique.

Puis on laisse malaxer le mélange pendant 20 minutes, la vitesse étant celle du repère F du GUEDU.

La poudre de carbonate de calcium ainsi traitée est ensuite refroidie pour l'essai de tamisage à sec sur tamis d'ouverture de maille de 325 meshs. Le refus après tamisage est de 50 g pour 100 g de carbonate de calcium traité alors que le refus au tamisage pour le carbonate de calcium de départ est de 0,01 g pour 100 g de carbonate de calcium non traité.

Le facteur d'homogénéité FH est alors égal à $\frac{50}{100} - \frac{0,01}{100} = 0,4999$

Essai n° 3 :

Cet essai illustre un autre mode de traitement d'un carbonate de calcium naturel.

Ainsi, on introduit dans un mélangeur de type GUEDU, 1000 g d'un carbonate de calcium naturel vendu par la société OMYA S.A. sous le nom de MILLICARB et 50 g d'un phosphate acide d'alcool stéarylique sous forme pulvérulente.

Puis on laisse malaxer le mélange pendant 20 minutes, la vitesse étant celle du repère F du GUEDU.

La poudre de carbonate de calcium ainsi traitée est ensuite refroidie pour l'essai de tamisage à sec sur tamis d'ouverture de maille de 325 meshs. Le refus au tamisage est de 43 g pour 100 g de carbonate de calcium traité alors que le refus au tamisage pour le carbonate de calcium de départ est de 0,01 g pour 100 g de carbonate de calcium non traité.

Le facteur d'homogénéité FH est alors égal à $\frac{43}{100} - \frac{0,01}{100} =0,4299$

Essai n° 4 :

Cet essai illustre un autre mode de traitement d'un carbonate de calcium naturel.

Ainsi, on introduit dans un mélangeur de type GUEDU, 1000 g d'un carbonate de calcium naturel vendu par la société OMYA S.A. sous le nom de MILLICARB et 50 g d'un phosphate acide d'alcool stéarylique à l'état fondu.

Puis on laisse malaxer le mélange pendant 20 minutes avant d'effectuer les mesures de refus au tamisage à sec. Le refus après tamisage est de 57 g pour 100 g de carbonate de calcium traité alors que le refus au tamisage pour le carbonate de calcium de départ est de 0,01 g pour 100 g de carbonate de calcium non traité.

Le facteur d'homogénéité FH est alors égal à $\frac{57}{100} - \frac{0,01}{100} = 0,5699$

Essai n° 5 :

Cet essai illustre un autre mode de traitement d'un carbonate de calcium naturel selon l'invention.

Ainsi, on introduit dans l'enceinte chauffée d'un mélangeur de type GUEDU disposant d'une pale tournante, 1000 g d'un carbonate de calcium naturel vendu par la société OMYA S.A. sous le nom de MILLICARB puis au bout de quelques minutes, 10 g d'un phosphate acide d'alcool stéarylique.

Puis on laisse malaxer le mélange pendant 30 minutes à la vitesse correspondant au repère G du GUEDU.

La poudre de carbonate de calcium ainsi traitée est ensuite refroidie pour l'essai de tamisage à sec sur tamis d'ouverture de maille de 325 meshs. Le refus après tamisage est de 4,8 g pour 100 g de carbonate de calcium traité alors que le refus au tamisage pour le carbonate de calcium de départ est de 0,01 g pour 100 g de carbonate de calcium non traité.

Le facteur d'homogénéité FH est alors égal à $\frac{4,8}{100} - \frac{0,01}{100} = 0,0479$

Essai n° 6 :

Cet essai illustre le traitement d'un carbonate de calcium naturel de granulométrie différente et selon un procédé connu.

Ainsi, on introduit, dans un mélangeur GUITTARD de type ML2 disposant d'une zone de malaxage préchauffée, 1000 g d'un carbonate de calcium naturel vendu par la société OMYA S.A. sous le nom de HYDROCARB et 30 g d'un phosphate acide d'alcool stéarylique.

Puis on laisse malaxer le mélange pendant 20 minutes à la vitesse de 47 tours/minute.

La poudre de carbonate de calcium ainsi traitée est ensuite refroidie pour l'essai de tamisage à sec sur tamis d'ouverture de maille de 325 meshs. Le refus après tamisage est de 48 g pour 100 g de carbonate de calcium traité alors que le refus au tamisage pour le carbonate de calcium de départ est de 0,01 g pour 100 g de carbonate de calcium non traité.

Le facteur d'homogénéité FH est alors égal à $\frac{48}{100} - \frac{0,01}{100} = 0,4799$

Essai n° 7 :

Cet essai illustre le traitement d'un carbonate de calcium naturel HYDROCARB selon l'invention.

Ainsi, on introduit, dans l'enceinte préchauffée d'un mélangeur de type GUEDU disposant d'une pale tournante, 1000 g d'un carbonate de calcium naturel vendu par la société OMYA S.A. sous le nom de HYDROCARB, puis au bout de quelques minutes, 10 g d'un phosphate acide d'alcool stéarylique.

Puis on laisse malaxer le mélange pendant 30 minutes à la vitesse correspondant au repère G du GUEDU.

La poudre de carbonate de calcium ainsi traitée est ensuite refroidie pour l'essai de tamisage à sec sur tamis d'ouverture de maille de 325 meshs. Le refus après tamisage est de 9 g pour 100 g de carbonate de calcium traité alors que le refus au tamisage pour le carbonate de calcium de départ est de 0,01 g pour 100 g de carbonate de calcium non traité.

Le facteur d'homogénéité FH est alors égal à $\frac{9}{100} - \frac{0,01}{100} = 0,0899$

Essai n° 8 :

Cet essai illustre le traitement d'un carbonate de calcium de synthèse par un procédé connu.

Ainsi, dans les mêmes conditions opératoires et avec le même matériel que dans l'essai n° 1, on malaxe 600 g de carbonate de calcium précipité vendu par la société SOLVAY sous le nom de SOCAL P2 et 18 g de phosphate acide d'alcool stéarylique. Les mesures de refus au tamisage étant effectuées avec le même matériel et les mêmes conditions opératoires que les essais précédents, le facteur d'homogénéité FH obtenu est égal à $\frac{64}{100} - \frac{0,5}{100} = 0,635$

Essai n° 9 :

Cet essai illustre le traitement d'un carbonate de calcium de synthèse par le procédé selon l'invention en utilisant le même matériel et le même mode opératoire que l'essai n° 5 et la même charge de départ que l'essai précédent.

Les mesures de refus au tamisage effectuées dans les mêmes conditions et avec le même matériel que les essais précédents aboutissent à un facteur d'homogénéité FH égal à $\frac{19,5}{100} - \frac{0,5}{100} = 0,19$

EXEMPLE 2 :

Cet exemple concerne le traitement par divers agents d'un carbonate de calcium naturel de granulométrie bien déterminée. La granulométrie de ce carbonate de calcium naturel commercialisé par la société OMYA S.A. sous le nom de OMYALITE 50 est telle que 50 % en poids des particules ont un diamètre moyen inférieur à 2 micromètres, mesuré à l'aide du granulomètre Sédigraph 5100.

Le traitement est effectué pour tous les essais par un mélange de 1 % en poids d'agent par rapport au poids de carbonate de calcium pendant quelques minutes au moyen d'un mélangeur de type GUEDU et suivant le mode opératoire de l'essai n° 5.

Une fois ces charges traitées obtenues, les mesures de prise de polyol et d'hydrophobie des divers essais ont toutes été effectuées avec le même matériel et le même mode opératoire.

Ainsi pour mesurer la prise ou pouvoir d'absorption de polyol, on pèse environ 5 g de la charge à analyser sous forme de poudre à 0,1 g près, puis on les place sur une plaque de verte dépolie et mate. A l'aide d'une burette on ajoute 1 ml de polyol de poids moléculaire 3400, de viscosité à 25°C de 510 mPa.s et d'indice d'hydroxyle de 48 et on mélange sous pression modérée la poudre et le polyol avec une spatule en acier.

L'addition finale de polyol ne s'effectue que par petites doses de 0,05 ml.

Par trituration et également après chaque ajout d'une dose de polyol, le mélange est homogénéisé jusqu'à ce qu'il forme une pâte consistante, mais non encore collante présentant une couleur uniforme sans tâches sombres indiquant un enrichissement en polyol.

Le point final d'absorption est atteint lorsqu'il se forme des petits rouleaux lors du repoussage de la pâte à l'aide de la spatule inclinée à environ 45° par rapport à la plaque de verte.

La prise ou absorption de polyol est alors fournie par la formule :

$$\frac{\text{consommation de polyol en ml x (1,02 = densité de polyol) x 100}}{\text{poids de l'échantillon en g}}$$

Pour effectuer le test d'hydrophobie des divers essais, on utilise un bécher ou une éprouvette dans lequel on verse environ 450 ml d'eau claire à température ambiante avant d'y ajouter 50 g de la charge à tester et d'agiter le mélange.

Si après un repos d'au moins deux minutes, il y a un très léger dépôt au fond du récipient et la quasi totalité de la poudre non mouillée à la surface de l'eau, la charge testée est alors considérée comme hydrophobe. Dans le cas contraire, la charge est hydrophile.

- Essai n° 10 :

Cet essai est l'essai témoin et concerne le carbonate de calcium de granulométrie, déterminée par un granulomètre Sédigraph 5100, dont 50 % en poids des particules ont un diamètre moyen inférieur à 2 micromètres.

- Essai n° 11 :

Cet essai concerne le traitement du carbonate de calcium précité par un mélange d'acide gras commercialisé par la société UNICHEMA sous le nom PRISTERENE 4911.

- Essai n° 12 :

Cet essai illustre l'invention et concerne le traitement du même carbonate de calcium par du phosphate acide d'alcool stéarylique.

- Essai n° 13 :

Cet essai illustre l'invention et concerne le traitement du même carbonate de calcium par du phosphate acide d'alcool décylique oxyéthylé 5 fois.

- Essai n° 14 :

Cet essai illustre l'invention et concerne le traitement du même carbonate de calcium par du phosphate d'alcool décylique oxyéthylé 5 fois et neutralisé par de l'ammoniac.

- Essai n° 15 :

Cet essai illustre l'invention et concerne le traitement du même carbonate de calcium par du phosphate acide d'alcool possédant 13 atomes de carbone, oxyéthylé 4 fois et oxypropylé 3 fois.

- Essai n° 16 :

Cet essai illustre l'invention et concerne le traitement du même carbonate de calcium par du phosphate acide de nonylphénol oxyéthylé 10 fois.

Essai n° 17 :

Cet essai illustre l'invention et concerne le traitement du même carbonate de calcium par du phosphate acide de nonylphénol oxyéthylé 17 fois.

Essai n° 18

Cet essai illustre l'invention et concerne le traitement du même carbonate de calcium par du phosphate acide de nonylphénol oxyéthylé 30 fois.

Essai n° 19

Cet essai illustre l'invention et concerne le traitement du même carbonate de calcium par du phosphate acide d'alcool possédant 32 atomes de carbone et oxyéthylé 25 fois.

Les résultats des mesures d'hydrophobie et de prise de polyol des divers essais sont rassemblés dans le tableau 1 ci-après.

TABLEAU 1

| | ESSAI n° | TYPE DE CHARGE | GRANULOMETRIE SEDIGRAPH 5100 (% < 2 µm) | POUVOIR D'ABSORPTION | HYDROPHOBIE POLYOL |
|---|---|---|---|---|---|
| TEMOIN | 10 | $CaCO_3$ non traité OMYALITE 50 | 50 | 24,6 | non |
| | | OMYALITE 50 + 1 % PRISTERENE 4911 | 50 | 16,6 | oui |
| INVENTION | 12 | OMYALITE 50 + 1 % phosphate acide alcool $C_{18}$ | 50 | 19 | non |
| INVENTION | 13 | OMYALITE 50 + 1 % phosphate acide alcool $C_{10}$ 5OE | 50 | 18,6 | non |
| INVENTION | 14 | OMYALITE 50 + 1 % phosphate alcool $C_{10}$ 5OE neutralisé $NH_3$ | 50 | 18,4 | non |
| INVENTION | 15 | OMYALITE 50 + 1 % phosphate acide alcool $C_{13}$-4OE-30P | 50 | 18,6 | non |
| INVENTION | 16 | OMYALITE 50 + 1 % phosphate acide nonylphénol 10 OE | 50 | 19,7 | non |
| INVENTION | 17 | OMYALITE 50 + 1 % phosphate acide nonylphénol 17 OE | 50 | 15,3 | non |
| INVENTION | 18 | OMYALITE 50 + 1 % phosphate acide nonylphénol 30 OE | 50 | 18,6 | non |
| INVENTION | 19 | OMYALITE 50 + 1 % phosphate acide alcool $C_{32}$ 25 OE | 50 | 14,9 | non |
| OE = oxyde d'éthylène<br>OP = oxyde de propylène | | | | | |

La lecture du tableau 1 permet de constater que les carbonates de calcium, de granulométrie dont 50 % en poids des particules ont un diamètre moyen inférieur à 2 micromètres, traités selon l'invention, sont tous hydrophiles et ont une prise de polyol diminué d'au moins 15 % par rapport à la charge non traitée, alors que la charge traitée, de l'art antérieur ne comporte pas simultanément ces deux caractéristiques.

Ces deux caractéristiques propres aux charges selon l'invention traduisent une amélioration des propriétés nécessaires en pratique pour pouvoir utiliser sans problème des charges dans la fabrication de mousses polyuréthannes souples, semi-rigides ou rigides.

EXEMPLE 3 :

Cet exemple concerne le traitement de carbonates de calcium de différentes granulométries et différentes origines. Le traitement et les mesures des différentes caractéristiques ont été effectuées pour les différents essais avec le même matériel et les mêmes conditions opératoires que dans l'exemple 2.

Essai n° 20 :

Cet essai est un essai témoin qui concerne un carbonate de calcium naturel commercialisé par la société OMYA S.A. sous le nom de MILLICARB et de granulométrie telle que 36 % en poids des particules ont un diamètre moyen inférieur à 2 micromètres mesuré à l'aide du Sédigraph 5100.

Essai n° 21:

Cet essai illustre l'invention et concerne le traitement de ce MILLICARB de l'essai n° 20 par 1 % en poids de phosphate acide d'alcool stéarylique par rapport au poids de carbonate de calcium.

Essai n° 22 :

Cet essai illustre l'invention et concerne le traitement de ce MILLICARB de l'essai n° 20 par 1 % en poids de phosphate acide d'alcool décylique oxyéthylé 5 fois par rapport au poids de carbonate de calcium.

Essai n° 23 :

Cet essai est un essai témoin qui concerne un carbonate de calcium naturel d'une granulométrie différente. Il s'agit du carbonate de calcium naturel vendu par la société OMYA S.A. sous le nom de HYDROCARB. La granulométrie de ce carbonate déterminée par un Sédigraph 5100 est telle que 58 % en poids des particules ont un diamètre moyen inférieur à 2 micromètres.

Essai n° 24 :

Cet essai illustre l'invention et concerne le traitement de cet HYDROCARB de l'essai n° 23 par 1 % en poids de phosphate acide d'alcool stéarylique, par rapport au poids de carbonate de calcium.

Essai n° 25 :

Cet essai illustre l'invention et concerne le traitement de cet HYDROCARB de l'essai n° 23 par 1 % en poids de phosphate acide d'alcool décylique oxyéthylé 5 fois.

Essai n° 26 :

Cet essai est l'essai témoin pour un carbonate de calcium précipité vendu par la société SOLVAY sous le nom de SOCAL P2 et d'une granulométrie déterminée à l'aide d'un Sédigraph 5100, dont 79 % en poids des particules ont un diamètre moyen inférieur à 2 micromètres et 69 % en poids un diamètre moyen inférieur à 1 micromètre.

Essai n° 27 :

Cet essai illustre l'invention et concerne le traitement du carbonate de calcium de synthèse de l'essai n° 26 par 2,5 % en poids de phosphate acide d'alcool décylique oxyéthylé 5 fois, par rapport au poids de carbonate de calcium.

Les résultats des mesures d'hydrophobie et de prise de polyol des divers essais sont rassemblés dans le tableau 2 ci-après.

TABLEAU 2

| | ESSAI n° | TYPE DE CHARGE | GRANULOMETRIE SEDIGRAPH 5100 % < 2 µm | GRANULOMETRIE SEDIGRAPH 5100 % < 1 µm | POUVOIR D'ABSORPTION POLYOL | HYDROPHOBIE |
|---|---|---|---|---|---|---|
| TEMOIN | 20 | $CaCO_3$ non traité (MILLICARB) | 36 | - | 25,5 | non |
| INVENTION | 21 | MILLICARB +1 % phosphate acide alcool $C_{18}$ | 36 | - | 17,4 | non |
| INVENTION | 22 | MILLICARB +1 % phosphate acide alcool $C_{10}$ 5OE | 36 | - | 12,1 | non |
| TEMOIN | 23 | $CaCO_3$ non traité (HYDROCARB) | 58 | - | 28,3 | non |
| INVENTION | 24 | HYDROCARB+1 % phosphate acide alcool $C_{18}$ | 58 | - | 19,8 | non |
| INVENTION | 25 | HYDROCARB+1 % phosphate acide alcool $C_{10}$ 5OE | 58 | - | 13,7 | non |
| TEMOIN | 26 | $CaCO_3$ non traité (SOCAL P2) | 79 | 69 | 41,6 | non |
| INVENTION | 27 | SOCAL P2 + 2,5 % phosphate acide alcool $C_{10}$ 5OE | 79 | 69 | 22,6 | non |
| OE = oxyde d'éthylène | | | | | | |

La lecture du tableau 2 permet de constater que quelles que soient la granulométrie ou la nature du carbonate de calcium, la charge traitée selon l'invention conserve son hydrophilie et a une prise de polyol diminuée d'au moins 20% et préférentiellement d'au moins 15% par rapport à la charge non traitée, alors que les charges de l'art antérieur ne présentent pas simultanément ces deux caractéristiques représentatives de l'amélioration des propriétés nécessaires à la mise en oeuvre sans problème des charges dans la fabrication de mousses polyuréthannes souples, semi-rigides ou rigides.

EXEMPLE 4 :

Cet exemple concerne le traitement de différentes charges minérales destinées à être mises en suspension dans un polyol en vue de leur utilisation dans la fabrication de mousses polyuréthannes souples, semi-rigides ou rigides. Le traitement et les mesures des différentes caractéristiques ont été effectuées pour les différents essais avec le même matériel et les mêmes conditions opératoires que dans l'exemple 2.

Essai n° 28 :

Cet essai est un essai témoin relatif à un trihydroxyde d'aluminium commercialisé par la société MARTINSWERK sous le nom de MARTINAL OL 104 et de granulométrie déterminée à l'aide d'un Sédigraph 5100, dont 68 % en poids des particules ont un diamètre moyen inférieur à 2 micromètres et 23 % en poids un diamètre moyen inférieur à 1 micromètre.

Essai n° 29 :

Cet essai concerne le traitement du trihydroxyde d'aluminium de l'essai n° 28 par 1% en poids de stéarine et correspond au produit commercial vendu par la sociégé MARTINSWERK sous le nom de MARTINAL OL 104C.

Essai n° 30 :

Cet essai illustre l'invention et concerne le traitement du trihydroxyde d'aluminium de l'essai n° 28 par 1 % en poids de phosphate acide d'alcool décylique oxyéthylé 5 fois, par rapport au poids de trihydroxyde d'aluminium.

Essai n° 31:

Cet essai est un essai témoin relatif à l'hydroxyde de magnésium commercialisé par la société MARTINSWERK sous le nom de MAGNIFIN H5 et de granulométrie, déterminée à l'aide d'un Sédigraph 5100, dont 69 % en poids des particules ont un diamètre inférieur à 2 micromètres et 23 % en poids un diamètre moyen inférieur à 1 micromètre.

Essai n° 32 :

Cet essai concerne le traitement de l'hydroxyde de magnésium de l'essai n° 32 par 1 % en poids d'un mélange d'acide gras commercialisé par la société UNICHEMA sous le nom PRISTERENE 4911, par rapport au poids d'hydroxyde de magnésium.

Essai n° 33 :

Cet essai illustre l'invention et concerne le traitement de l'hydroxyde de magnésium de l'essai n° 31 par 1 % en poids de phosphate acide d'alcool décylique oxyéthylé 5 fois, par rapport au poids d'hydroxyde de magnésium.

Essai n° 34 :

Cet essai est un essai témoin relatif à un talc de granulométrie, mesurée à l'aide d'un Sédigraph 5100, dont 20 % en poids des particules ont un diamètre moyen inférieur à 2 micromètres et 6 % en poids un diamètre moyen inférieur à 1 micromètre.

Essai n° 35 :

Cet essai illustre l'invention et concerne le traitement du talc de l'essai n° 34 par 1 % en poids de phosphate acide d'alcool décylique oxyéthylé 5 fois, par rapport au poids de talc.

Les résultats des mesures d'hydrophobie et de prise de polyol des divers essais sont rassemblés dans le tableau 3 suivant :

TABLEAU 3

| | ESSAI n° | TYPE DE CHARGE | GRANULOMETRIE SEDIGRAPH 5100 % < 2 µm | GRANULOMETRIE SEDIGRAPH 5100 % < 1 µm | POUVOIR D'ABSORPTION POLYOL | HYDROPHOBIE |
|---|---|---|---|---|---|---|
| TEMOIN | 28 | Al(OH)3 non traité MARTINAL OL 104 | 68 | 23 | 39,2 | non |
| | 29 | MARTINAL OL 104C | 68 | 23 | 26,5 | oui |
| INVENTION | 30 | MARTINAL OL 104 +1 % phosphate acide alcool $C_{10}$ 5OE | 68 | 23 | 25,9 | non |
| TEMOIN | 31 | $Mg(OH)_2$ MAGNIFIN H5 | 69 | 23 | 36,7 | non |
| | 32 | MAGNIFIN H5 +1 % PRISTERENE 4911 | 69 | 23 | 30,1 | oui |
| INVENTION | 33 | MAGNIFIN H5 +1 % phosphate acide alcool $C_{10}$ 5OE | 69 | 23 | 29,4 | non |
| TEMOIN | 34 | Talc non traité | 20 | 6 | 38,4 | non |
| INVENTION | 35 | Talc +1 % phosphate acide alcool $C_{10}$ 5OE | 20 | 6 | 32,6 | non |
| OE = oxyde d'éthylène | | | | | | |

La lecture du tableau 3 permet de constater que quel que soit le type de charge, la charge traitée selon l'invention conserve son hydrophilie et possède une prise de polyol diminuée d'au moins 20 % et préférentiellement d'au moins 15 % par rapport à la charge non traitée, alors que les charges de l'art antérieur ne présentent pas simultanément ces caractéristiques représentatives de l'amélioration des propriétés nécessaires à la mise en oeuvre sans problème des charges dans la fabrication de mousses polyuréthannes souples, semi-rigides ou rigides.

EXEMPLE 5 :

Cet exemple concerne l'obtention de suspensions dans les polyols de carbonate de calcium naturel contenant différentes quantités d'agent de traitement.

Pour tous les essais de l'exemple, le carbonate de calcium mis en oeuvre est le même que celui de l'exemple 2, c'est-à-dire le carbonate de calcium naturel de granulométrie mesurée à l'aide du granulomètre Sédigraph 5100, dont 50 % en poids des particules ont un diamètre moyen inférieur à 2 micromètres et commercialisé par OMYA S.A. sous le nom OMYALITE 50.

De même, pour chaque essai, le traitement de la charge est effectué dans les mêmes conditions opératoires que dans l'exemple 2 et avec le même appareillage.

Une fois le traitement effectué pour chacun des essais avec une quantité différente d'agent de traitement, on introduit dans un bécher de 500 ml muni d'un agitateur tournant à 500 tours/minute, 100 g de polyol de poids moléculaire 3000 et d'indice d'hydroxyle 55. Puis on agite 1 minute avant d'introduire 100 g de la charge traitée et de poursuivre l'agitation pendant 5 minutes à 700 tours/minute. La suspension ainsi réalisée est alors laissée au repos pendant 2 heures.

Au bout de 2 heures, on effectue les mesures de viscosité de la suspension dans le polyol à 21°C et à 10 tours/minute et 100 tours/minute à l'aide d'un viscosimètre Brookfield type RVT muni du mobile adéquat.

Puis on laisse la suspension au repos pendant 24 heures avant de procéder à nouveau à une mesure de viscosité dans les mêmes conditions que précédemment. Au bout de 7 jours de stockage de la suspension on procède à la détermination d'une part de la non sédimentation à l'aide d'une spatule plongée au fond de la suspension et d'autre part de la non décantation de manière visuelle.

Ainsi les divers essais effectués dans le cadre de cet exemple mettent en oeuvre différentes quantités de phosphate acide d'alcool décylique oxyéthylé 5 fois et sont les suivants :

Essai n° 36 :

Cet essai constitue l'essai témoin et met en oeuvre le carbonate de calcium précité et non traité.

Essai n° 37 :

Cet essai met en oeuvre le carbonate de calcium précité et traité à l'aide de 0,4 % en poids, par rapport au carbonate de calcium, de phosphate acide d'alcool décylique oxyéthylé 5 fois.

Essai n° 38 :

Cet essai met en oeuvre le carbonate de calcium précité et traité à l'aide de 0,6 % en poids, par rapport au carbonate de calcium, de phosphate acide d'alcool décylique oxyéthylé 5 fois.

Essai n° 39 :

Cet essai met en oeuvre le carbonate de calcium précité et traité à l'aide de 0,8 % en poids, par rapport au poids de carbonate de calcium, de phosphate acide d'alcool décylique oxyéthylé 5 fois.

Essai n° 40 :

Cet essai met en oeuvre le carbonate de calcium précité et traité à l'aide de 1,0 % en poids, par rapport au poids de carbonate de calcium, de phosphate acide d'alcool décylique oxyéthylé 5 fois.

Essai n° 41 :

Cet essai met en oeuvre le carbonate de calcium précité et traité à l'aide de 1,2 % en poids, par rapport au poids de carbonate de calcium, de phosphate acide d'alcool décylique oxyéthylé 5 fois.

Essai n° 42 :

Cet essai met en oeuvre le carbonate de calcium précité et traité à l'aide de 1,4 % en poids, par rapport au poids de carbonate de calcium, de phosphate acide d'alcool décylique oxyéthylé 5 fois.

Les résultats des mesures de viscosité, décantation et sédimentation des divers essais sont rassemblés dans le tableau 4 suivant :

TABLEAU 4

| ESSAI n° | | 36 | 37 | 38 | 39 | 40 | 41 | 42 |
|---|---|---|---|---|---|---|---|---|
| $CaCO_3$ | | OMYAL-ITE 50 | OMYAL-ITE 50 | OMYAL-ITE 50 | OMYAL-ITE 50 | OMYAL-ITE 50 | OMYAL-ITE 50 | OMYAL-ITE 50 |
| Quantité d'agent de traitement (% poids) | | 0,00 | 0,40 | 0,60 | 0,80 | 1,00 | 1,20 | 1,40 |
| Quantité $CaCO_3$ (% poids total de la suspension) | | 50 | 50 | 50 | 50 | 50 | 50 | 50 |
| Quantité polyol (% poids total de la suspension) | | 50 | 50 | 50 | 50 | 50 | 50 | 50 |
| Viscosité Brookfield après 2 h (mPa.s) | 10 T/mn | 4200 | 4000 | 3800 | 3080 | 2800 | 2960 | 4000 |
| | 100 T/mn | 3200 | 2920 | 2850 | 2600 | 2460 | 2480 | 2620 |
| Viscosité Brookfield après 24 heures (mPa.s) | 10 T/mn | 4400 | 3960 | 3680 | 3360 | 2960 | 3200 | 4240 |
| | 100 T/mn | 3360 | 2970 | 2880 | 2740 | 2550 | 2620 | 2700 |
| Sédimentation après 7 jours | | Dépôt dur | Dépôt peu dur | Nulle | Nulle | Nulle | Nulle | Nulle |
| Décantation après 7 jours | | Oui | Légère | Nulle | Nulle | Nulle | Nulle | Nulle |

La lecture du tableau 4 permet de constater que selon l'invention il est possible d'obtenir des suspensions à 50 % en poids de carbonate de calcium naturel dans des polyols contenant de 0,5 % à 3,0 % en poids par rapport au poids de la charge d'un agent de formule générale (I) et préférentiellement entre 0,7 % et 1,5 % en poids, ne présentant ni phénomène de décantation, ni phénomène de sédimentation, ni d'épaississement significatifs.

EXEMPLE 6 :

Cet exemple concerne l'obtention de suspensions dans les polyols de différentes charges à différentes concentrations en matière sèche.

Essais n° 43 à 45 :

Ces essais concernent l'obtention de suspensions de carbonate de calcium naturel de granulométrie mesurée à l'aide d'un granulomètre Sédigraph 5100 et dont 36 % en poids des particules ont un diamètre moyen inférieur à 2 micromètres et commercialisé par la société OMYA S.A. sous le nom de MILLICARB dans un polyol de poids moléculaire 3000 et d'indice d'hydroxyle 55.

Dans ce but, avec le même mode opératoire et le même appareillage que celui de l'exemple 5, on réalise les suspensions par la mise en oeuvre pour les essais suivants de :

Essai n° 43 :

150 g de Millicarb non traité et 50 g du polyol précité pour obtenir une suspension témoin à 75 % de concentration en matière sèche.

Essai n° 44 :

150 g de la charge traitée, selon l'invention, de l'essai n° 22 et 50 g du polyol précité pour obtenir une suspension, selon l'invention, à 75 % de concentration en matière sèche.

Essai n° 45 :

150 g de la charge traitée, selon l'invention, de l'essai n° 21 et 50 g du polyol précité pour obtenir une suspension, selon l'invention, à 75 % de concentration en matière sèche.

Essai n° 46 :

Dans cet essai, avec le même mode opératoire et le même appareillage que celui de l'exemple 5, on réalise une suspension de carbonate de calcium naturel vendu par la société OMYA S.A. sous le nom de OMYALITE 50 dans un polyol de poids moléculaire 3400 et d'indice d'hydroxyle 48 par la mise en oeuvre de 180 g d'OMYALITE 50 traité avec 1 % en poids d'un phosphate acide de nonylphénol oxyéthylé 17 fois et 120 g du polyol précité pour obtenir une suspension, selon l'invention, à 60 % de concentration en matière sèche.

Essai n° 47 :

Cet essai met en oeuvre, dans les mêmes conditions opératoires et avec le même matériel que dans l'essai précédent, 180 g d'OMYALITE 50 traité avec 1 % en poids d'un phosphate acide d'alcool possédant 32 atomes de carbone et oxyéthylé 25 fois et 120 g du polyol précité pour obtenir une suspension, selon l'invention, à 60 % de concentration en matière sèche.

Essai n° 48 :

Cet essai, effectué dans les mêmes conditions opératoires et avec le même appareillage que l'essai n° 43, met en oeuvre 120 g de carbonate de calcium précipité de granulométrie mesurée à l'aide d'un granulomètre Sédigraph 5100 et dont 79 % en poids des particules ont un diamètre moyen inférieur à 2 micromètres et 69 % en poids un diamètre moyen inférieur à 1 micromètre et vendu par la société SOLVAY sous le nom de SOCAL P2, et 80 g du polyol précité pour obtenir une suspension témoin à 60 % de concentration en matière sèche.

Essai n° 49 :

Cet essai, effectué dans les mêmes conditions opératoires et avec le même appareillage que l'essai précédent, met en oeuvre 120 g de SOCAL P2 traité avec 2,5 % de phosphate acide d'alcool décylique oxyéthylé 5 fois et 80 g du polyol précité pour obtenir une suspension, selon l'invention, à 60 % de concentration en matière sèche.

Essai n° 50 :

Cet essai, effectué dans les mêmes conditions opératoires et avec le même appareillage que l'essai n° 43, met en oeuvre 120 g de kaolin de granulométrie mesurée à l'aide d'un granulomètre Sédigraph 5100 dont 84 % en poids des particules ont un diamètre moyen inférieur à 2 micromètres et 76 % en poids un diamètre moyen inférieur à 1 micromètre et 80 g du polyol précité pour obtenir une suspension témoin à 60 % de concentration en matière sèche. Or en cours d'ajout de kaolin, la viscosité est rapidement montée jusqu'à bloquer l'agitateur. La réalisation de cet essai témoin montre donc l'impossibilité d'obtenir une suspension de kaolin à 60 % de concentration en kaolin.

Essai n° 51 :

Cet essai, effectué dans les mêmes conditions opératoires et avec le même appareillage que l'essai précédent, met en oeuvre 120 g de kaolin traité avec 1 % en poids de phosphate acide d'alcool décylique oxyéthylé 5 fois, 80 g du polyol précité pour obtenir une suspension, selon l'invention, à 60 % de concentration en matière sèche.

Essai n° 52 :

Cet essai, effectué dans les mêmes conditions opératoires et avec le même appareillage que l'essai n° 43, met en oeuvre 110 g d'hydroxyde de magnésium de granulométrie mesuré à l'aide d'un granulomètre Sédigraph 5100 dont 69 % en poids des particules ont un diamètre moyen inférieur à 2 micromètres et 23 % en poids un diamètre moyen inférieur à 1 micromètre et vendu par la société MARTINSWERK sous le nom de MAGNIFIN H5 et 80 g d'un polyol de poids moléculaire 3400 et d'indice d'hydroxyle de 48 pour obtenir une suspension témoin à 55 % de concentration en matière sèche. Or en cours d'ajout d'hydroxyde de magnésium, la viscosité est rapidement montée jusqu'à bloquer l'agitateur. La réalisation de cet essai témoin montre donc l'impossibilité d'obtenir une suspension d'hydroxyde de magnésium à 55 % de concentration en hydroxyde de magnésium.

Essai n° 53 :

Cet essai, effectué dans les mêmes conditions opératoires et avec le même appareillage que l'essai précédent, met en oeuvre 110 g de l'hydroxyde de magnésium traité, selon l'invention, de l'essai n° 33 et 90 g du polyol précité pour obtenir une suspension, selon l'invention, à 55 % de concentration en matière sèche.

Essai n° 54 :

Cet essai, effectué dans les mêmes conditions opératoires et avec le même appareillage que l'essai n° 43, met en oeuvre 90 g de talc de granulométrie mesurée à l'aide d'un granulomètre Sédigraph 5100 dont 20 % en poids des particules ont un diamètre moyen inférieur à 2 micromètres et 6 % en poids un diamètre moyen inférieur à 1 micromètre et 110 g d'un polyol de type polyéther polyol aminoaromatique de poids moléculaire d'environ 1000 et d'indice d'hydroxyle d'environ 545 pour obtenir une suspension témoin à 45 % de concentration en matière sèche.

Essai n° 55 :

Cet essai, effectué dans les mêmes conditions opératoires et avec le même appareillage que l'essai précédent, met en oeuvre 90 g du talc traité, selon l'invention de l'essai n° 35 et 110 g du polyol précité pour obtenir une suspension, selon l'invention, à 55 % de concentration en matière sèche.

Essai n° 56 :

Cet essai, effectué dans les mêmes conditions opératoires et avec le même appareillage que l'essai n° 43, met en oeuvre 120 g d'hydroxyde d'aluminium de granulométrie mesurée à l'aide d'un granulomètre Sédigraph 5100 dont 68 % en poids des particules ont un diamètre moyen inférieur à 2 micromètres et 23 % en poids un diamètre moyen inférieur à 1 micromètre vendu par la société MARTINSWERK sous le nom de MARTINAL OL 104 et 80 g d'un polyol de poids moléculaire 3400 et d'indice d'hydroxyle de 48 pour obtenir une suspension témoin à 60 % de concentration en matière sèche. Or en cours d'ajout d'hydroxyde d'aluminium, la viscosité est rapidement montée jusqu'à bloquer l'agitateur. La réalisation de cet essai témoin montre donc l'impossibilité d'obtenir une suspension d'hydroxyde d'aluminium à 60 % de concentration en hydroxyde d'aluminium.

Essai n° 57 :

Cet essai, effectué dans les mêmes conditions opératoires et avec le même appareillage que l'essai précédent, met en oeuvre 120 g d'hydroxyde d'aluminium traité, selon l'invention de l'essai n° 30 et 80 g du polyol précité pour obtenir une suspension selon l'invention, à 60 % de concentration en matière sèche.

Les diverses suspensions obtenues (essais n° 37 à n° 52), on procède aux mesures de viscosités Brookfield à 10 tours/minute et 100 tours/minute au bout de 2 heures, 24 heures et de décantation après 7 jours avec le même mode opératoire et le même viscosimètre que dans l'exemple 5.

Les résultats obtenus figurent dans les tableaux 5 et 6 ci-après.

TABLEAU 5

| ESSAI n° | | 43 TEMOIN | 44 INVENTION | 45 INVENTION | 46 INVENTION | 47 INVENTION | 48 TEMOIN | 49 INVENTION |
|---|---|---|---|---|---|---|---|---|
| Charge | | MILLICARB Non traité | MILLICARB traité | MILLICARB traité | OMYALITE 50 traité | OMYALITE 50 traité | SOCAL P2 Non traité | SOCAL P2 Traité |
| Quantité d'agent de traitement (% poids) | | 0,00 | 1,00 | 1,00 | 1,00 | 1,00 | 0,00 | 2,50 |
| Quantité charge (% poids total de la suspension) | | 75 | 75 | 75 | 60 | 60 | 60 | 60 |
| Quantité polyol (% poids total de la suspension) | | 25 | 25 | 25 | 40 | 40 | 40 | 40 |
| Viscosité Brookfield après 2 h mPa.s | 10 T/mn | non mesurable | 114 400 | 244 800 | 13 760 | 23 360 | 72 000 | 24 000 |
| | 100 T/mn | non mesurable | 53 920 | 107 800 | 6 900 | 8 900 | 58 700 | 16 600 |
| Viscosité Brookfield après 24 heures mPa.s | 10 T/mn | non mesurable | 131 200 | 273 000 | 13 100 | 24 320 | 71 200 | 23 200 |
| | 100 T/mn | non mesurable | 62 000 | 96 200 | 6 900 | 9 380 | 59 800 | 16 500 |
| Sédimentation après 7 jours | | Nulle | Nulle | Nulle | Nulle | Nulle | Nulle | Nulle |
| Décantation après 7 jours | | Nulle | Nulle | Nulle | Nulle | Nulle | Nulle | Nulle |

Non mesurable signifie viscosité supérieure au maximum de la graduation du viscosimètre

TABLEAU 6

| ESSAI n° | | 50 TEMOIN | 51 INVENTION | 52 TEMOIN | 53 INVENTION | 54 TEMOIN | 55 INVENTION | 56 TEMOIN | 57 INVENTION |
|---|---|---|---|---|---|---|---|---|---|
| Charge | | KAOLIN Non traité | KAOLIN Traité | MAGNIFIN H5 Non Traité | MAGNIFIN H5 Traité | TALC Non traité | TALC Traité | MARTINAL OL104 non traite | MARTINAL OL 104 Traité |
| Quantité d'agent de traitement (% poids) | | 0,00 | 1,00 | 0,00 | 1,00 | 0,00 | 1,00 | 0,00 | 1,00 |
| Quantité charge (% poids total de la suspension) | | 60 | 60 | 55 | 55 | 45 | 45 | 60 | 60 |
| Quantité polyol (% poids total de la suspension) | | 40 | 40 | 45 | 45 | 55 | 55 | 40 | 40 |
| Viscosité Brookfield après 2 h mPa.s | 10 T/mn | Dispersion non réalisable | 211 200 | Dispersion non réalisable | 57 100 | 1 450 000 | 844 000 | Dispersion non réalisable | 43 600 |
| | 100 T/mn | Dispersion non réalisable | 140 600 | Dispersion non réalisable | 23 400 | non mesurable | 300 000 | Dispersion non réalisable | 33 000 |
| Viscosité Brookfield après 24 heures mPa.s | 10 T/mn | Dispersion non réalisable | 204 800 | Dispersion non réalisable | 73 600 | 1 700 000 | 1 000 000 | Dispersion non réalisable | 64 000 |
| | 100 T/mn | Dispersion non réalisable | non mesurable | Dispersion non réalisable | 34 600 | non mesurable | non mesurable | Dispersion non réalisable | 43 200 |
| Sédimentation après 7 jours | | Dispersion non réalisable | Nulle | Dispersion non réalisable | Nulle | Nulle | Nulle | Dispersion non réalisable | Nulle |
| Décantation après 7 jours | | Dispersion non réalisable | Nulle | Dispersion non réalisable | Nulle | Nulle | Nulle | Dispersion non réalisable | Nulle |

Non mesurable signifie viscosité supérieure au maximum de la graduation du viscosimètre

La lecture des tableaux 5 et 6 permet de constater que, selon l'invention, il est possible d'obtenir des suspensions de diverses charges dans différents polyols ne présentant ni phénomène de décantation, ni phénomène de sédimentation, ni épaississement significatifs permettant ainsi une manipulation plus aisée de ces suspensions en vue de la fabrication de mousses polyuréthannes souples, semi-rigides ou rigides.

## Revendications

1. Procédé de traitement de charges minérales pour la fabrication d'objets en matière plastique et notamment en vue de leurs mises en suspension dans des polyols et leurs utilisations dans les mousses polyuréthannes caractérisé en ce que l'on mélange au moins un agent de traitement de formule générale (I) :

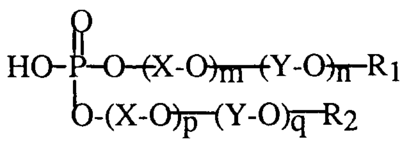

avec $R_1$ = soit H soit alkyle en $C_8$ à $C_{40}$ soit aryle ou alkylaryle ou arylalkyle en $C_6$ à $C_{40}$
avec $R_2$ = soit alkyle en $C_8$ à $C_{40}$ soit aryle ou alkylaryle ou arylalkyle en $C_6$ à $C_{40}$
X = $-CH_2-CH_2-$

Y = 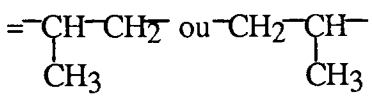 ou

(m + n) varie de 0 à 30 avec m ≦ 30 et n ≦ 30
(p + q) varie de 0 à 30 avec p ≦ 30 et q ≦ 30

avec le ou les charges minérales à traiter de manière à obtenir un facteur d'homogénéité (FH) inférieur à 0,2 le dit facteur étant défini comme la différence en poids entre le refus au tamisage à sec des charges traitées et le refus au tamisage à sec des charges non traitées mesuré par utilisation d'un tamis conforme à la norme NF X11-501 (ouverture de maille 325 meshs).

2. Procédé de traitement de charges minérales selon la revendication 1 caractérisée en ce que le dit facteur d'homogénéité FH est inférieur à 0,10.

3. Procédé de traitement de charges minérales selon la revendication 2 caractérisée en ce que le dit facteur d'homogénéité FH est inférieur à 0,05.

4. Charge minérale traitée à l'aide d'au moins un agent de traitement de formule générale (I) en vue de son utilisation dans les mousses polyuréthannes caractérisée en ce qu'elle est hydrophile et en ce que sa prise de polyol est diminuée d'au moins 20% par rapport à la charge minérale non traitée.

5. Charge minérale traitée selon la revendication 4 caractérisée en ce qu'elle est hydrophile et en ce que sa prise de polyol est diminuée d'au moins 15 %.

6. Charge minérale traitée selon la revendication 4 caractérisée en ce qu'elle est obtenue par le procédé de traitement selon l'une quelconque des revendications 1 à 3.

7. Charge minérale traitée selon la revendication 5 caractérisée en ce qu'elle est obtenue par le procédé de traitement selon l'une quelconque des revendications 1 à 3.

8. Charge minérale traitée selon l'une des revendications 4 à 7 caractérisée en ce qu'elle est choisie parmi les carbonates de calcium d'origine naturelle ou synthétique, le carbonate de magnésium, le carbonate de zinc, les sels mixtes de magnésium et de calcium tels que les dolomies, la chaux, la magnésie, le sulfate de baryum, les sulfates de calcium, les hydroxydes de magnésium, d'aiuminium, la silice, la wollastonite, les argiles et autres silico-alumineux tels que les kaolins, les silico-magnésiens tels que le talc, le mica, les billes de verte pleines ou creuses, les oxydes métalliques tels que par exemple l'oxyde de zinc, les oxydes de fer, l'oxyde de titane et plus particulièrement choisies parmi les carbonates de calcium naturels ou précipités tels que craie, calcite, marbre, les dolomies,

l'hydroxyde d'aluminium, l'hydroxyde de magnésium, le talc, ou leurs mélanges.

**9.** Suspension de charges minérales traitées selon les revendications 4 à 8 dans des polyols caractérisée en ce que la concentration en matière sèche peut atteindre 80 % en poids et en ce qu'elle ne soit soumise ni à décantation, ni à sédimentation, ni à épaississement après 7 jours de stockage au repos et en ce qu'elle contient 0,5 % à 3 % en poids de l'agent de traitement de formule générale (I) par rapport au poids de la charge minérale.

**10.** Suspension de charges minérales traitées selon la revendication 9 dans des polyols caractérisée en ce qu'elle contient 0,7 % à 1,5 % en poids de l'agent de traitement de formule générale (I) par rapport au poids de la charge minérale.

**11.** Utilisation des suspensions de charges minérales traitées dans les polyols selon les revendications 9 et 10 à la fabrication de mousses polyuréthannes souples, semi-rigides ou rigides.

**12.** Utilisation des mousses polyuréthannes souples, semi-rigides ou rigides de la revendication 11 à la fabrication d'objets moulés ou non.

Office européen des brevets

# RAPPORT DE RECHERCHE EUROPEENNE

Numero de la demande
EP 96 20 0187

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | BE-A-670 958 (BAYER)<br>* page 4, dernier alinéa *<br>* page 3, dernier alinéa - page 4, alinéa 2; revendications 1-5 *<br>--- | 1,8,9 | C09C3/08<br>C09D17/00<br>C08K9/04<br>C08L75/04 |
| X | GB-A-1 169 352 (LAPORTE TITANIUM)<br>* revendications 1,12,14 *<br>--- | 1,8 | |
| X | EP-A-0 029 137 (BAYER)<br>* page 7, ligne 17 - ligne 22; revendication 4 *<br>--- | 1,8 | |
| X | DE-A-17 92 798 (BAYER)<br>* page 4, dernier alinéa - page 5, alinéa 3 *<br>* page 6, alinéa 3-4 *<br>--- | 1,8,9 | |
| X | FR-A-2 286 179 (I.C.I.)<br>* page 1, ligne 33 - page 2, ligne 18; revendication 1 *<br>--- | 1,8 | **DOMAINES TECHNIQUES RECHERCHES (Int.Cl.6)** |
| X | EP-A-0 216 516 (ECC INTERNATIONAL)<br>* revendications 1-4 *<br>--- | 1,8 | C09C |
| X | DATABASE WPI<br>Week 8346<br>Derwent Publications Ltd., London, GB;<br>AN 83-816675<br>& JP-A-58 168 663 (ASAHI ECKART) , 5 Octobre 1983<br>* abrégé *<br>---<br>-/-- | 1 | |

Le présent rapport a été établi pour toutes les revendications

| Lieu de la recherche | Date d'achèvement de la recherche | Examinateur |
|---|---|---|
| LA HAYE | 1 Mars 1996 | Van Bellingen, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

Office européen des brevets

# RAPPORT DE RECHERCHE EUROPEENNE

Numero de la demande
EP 96 20 0187

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DATABASE WPI<br>Week 9134<br>Derwent Publications Ltd., London, GB;<br>AN 91-248028<br>& JP-A-03 074 472 (ASAHI KASEI METALS) , 29 Mars 1991<br>* abrégé *<br>--- | 1 | |
| X | DATABASE WPI<br>Week 8734<br>Derwent Publications Ltd., London, GB;<br>AN 87-238838<br>& JP-A-62 161 862 (DAINICHISEIKA COLOR CHEM.) , 17 Juillet 1987<br>* abrégé *<br>--- | 1 | |
| A | EP-A-0 496 150 (KERR-MCGEE)<br>* revendication 1 *<br>--- | 1 | |
| A | BE-A-667 292 (BAYER)<br>* page 6, ligne 15 - ligne 25; revendications 1,2 *<br>----- | 1,8 | DOMAINES TECHNIQUES RECHERCHES (Int.Cl.6) |

Le présent rapport a été établi pour toutes les revendications

| Lieu de la recherche | Date d'achèvement de la recherche | Examinateur |
|---|---|---|
| LA HAYE | 1 Mars 1996 | Van Bellingen, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)